# EUROPEAN PATENT APPLICATION

(11) **EP 4 589 063 A1**
(43) Date of publication of application: **23.07.2025**
(21) Application number: 24152235.8
(22) Date of filing: 16.01.2024
(51) Int. Cl.: D06F 37/26, D06F 39/08, D06F 37/20

(54) **WEIGHT DEVICE FOR A WASHING MACHINE WITH INTEGRATED FLUID DRAINAGE**

(71) Applicant: ARMETON INTERNATIONAL DMCC, 923036 Dubai (AE)
(72) Inventor: Habestor, Emanuel, 923036 Dubai (AE)
(74) Representative: Mathys & Squire

(57) **Abstract**

The invention is related to a weight device (10) for increasing stability of a washing drum (110) of a washing machine (100), comprising a weight body (20) with a mounting interface (22) to be mounted at a counter-mounting-interface (122) of the washing machine (100), in particular a washing tub (160) of the washing machine (100), in a position at least partly surrounding an access opening (130) of the washing machine (100) providing access to the washing drum (110), **characterised in that** at least one fluid channel (30) is formed inside of the weight body (20) having a channel inlet (32) for fluid communication with a fluid source (140) of the washing machine (100) and a channel outlet (34) for fluid communication with a fluid drainage (150) of the washing machine (100).

## Description

The present invention is related to a weight device for increasing stability of a washing drum of a washing machine by stabilizing the washing machines tub as well as a production method for producing such a weight device.

It is known to provide weight devices for increasing stability of washing drums. During the washing process of a washing machine situations occur where the washing drum is rotated with high speed. High speed rotation comes along with vibrations. To stabilize the vibrations, damp the vibrations and in particular ensure the stability of the washing machine during high-speed rotational situations it is known to provide additional weight to the washing machine. A preferred embodiment of those weight devices providing additional weight is to locate those weights close to the access opening of the washing machine. Those access openings usually are of circular shape and are closed with a circular closure. It is also known to provide a sealing device sealing that closure against the circular opening. In particular at this opening end of the washing drum, vibrations are very harmful to the washing machine. Therefore, the known weight devices usually are located surrounding the circular opening thereby providing the necessary increased stability exactly at the desired location.

One disadvantage of commonly known weight devices is the fact that they interfere with the need to guide fluid into or out of the washing machine or into or out of the washing drum. This has to be understood during the drying as well as the washing cycles of the washing procedure. When the drum is rotated with high speed, the water is pressed out of the washing drum and has to be guided to a fluid device taking on the fluid load resulting from the high-speed rotation. To guide that caught water to a fluid drainage a guiding tube usually is used. That guiding tube is in particular extending along or aside of the circular access opening and thereby interferes with the need to provide space for the circumferential weight. Therefore, it is known to either separate the weight device into several parts to provide space for the guiding tube for the fluid. An alternative solution is a single weight device with a reduction in thickness so that a groove is provided to create space for a fluid guiding tube.

The disadvantage of the two commonly known solutions is the reduction of weight if the weight device is separated. If the weight device is kept unified the reduction of thickness reduces the weight in that location and additionally reduces the stability. It might lead to the risk of cracks and breaking of the weight device due to high vibration situations. This is in particular the fact if the weight device usually is made out of a robust but breakable material like concrete.

It is an object of the present invention to provide an easy and cost-efficient possibility to solve aforesaid disadvantages at least partly. It is further an object of the present invention to provide an easy and cost-efficient possibility to provide a drainage function for fluid in a washing machine through a weight device.

Aforesaid object is solved by an inventive weight device according to claim 1 and an inventive production method according to claim 11. The features of the sub claim can be combined with each other freely.

The present invention provides a weight device for increasing stability of a washing drum of a washing machine. Such a weight device comprises a weight body with a mounting interface to be mounted at a counter-mounting-interface of the washing machine, in particular on a washing tub of the washing machine in a position at least partly surrounding an access opening of the washing machine providing access to the washing drum. The inventive weight device is characterized in that at least one fluid channel is formed inside of the weight body having a channel inlet for fluid communication with a fluid source of the washing machine as well as a channel outlet for fluid communication with a fluid drainage of the washing machine or vice versa from a fluid source into the washing drum.

The inventive weight device is based on the commonly known weight devices to provide additional weight for increasing stability of the washing drum of the washing machine. In a commonly known way, the weight device should be mounted in a position at least partly around the access opening of the washing machine. To provide that mountability the mounting interface is provided in particular at the weight body or even is a part of the weight body. Depending on the specific function the weights device can also work as a counterweight device.

The inventive weight device now provides a fluid channel which is at least partly formed inside of the weight body. In contrast to the commonly known situations the fluid channel is thereby integrated inside of the body of the weight device and thereby no separation of the weight device is necessary. In other words, now the weight device can be provided continuous even through this position where the fluid communication is necessary. The integration of the tube leads to a minimum interference of space at the position where the fluid communication is necessary. It has to be noted, that the fluid communication can be at any position of the weight device, in particular at the lowest level related to gravity direction but also at any other position at the weights device.

Furthermore, compared to the solution where a groove with a reduced thickness is provided in the commonly known weight device, the stability of such an inventive weight body is significantly increased. Since now the weight body surrounds or even embeds the fluid channel completely only a very limited reduced thickness is provided in that area. In other words, even if a robust but breakable material like concrete is used for the weight body a high stability is kept in particular in the area where the fluid channel is formed.

In other words, an inventive weight device comprises now an increased flexibility of construction in particular including the area where the fluid communication is necessary. Thereby the stability of the weight device as well as the possibility to provide increased weight in particular at a position where fluid communication is necessary is provided by the inventive invention. In other words, the weight function and the fluid communication function are combined in a space optimized manner.

Beside the fact that the final product namely the mounted weight device, provides an increased weight and an increased stability also the mounting process itself is optimized by an inventive weight device. Whereas for commonly known weight devices the mounting procedure was separate from the establishment of the fluid communication, this can be achieved in less mounting steps according to the present invention. In other words, when the weight device has been mounted with the mounting interface at the counter-mounting-interface, only a fluid communication between the fluid channel and the fluid source as well as the fluid drainage needs to be established. No further mounting or fixation of a separate fluid tube according to the commonly known solutions is necessary in the present invention. This simplifies the mounting procedure.

It can be an advantage if according to the present invention the weight device is characterised in that the fluid channel is at least partly formed by a fluid tube. Wherein in general the fluid channel can be provided by a surrounding material of the weight body, providing a fluid tube forming the fluid channel comes along with several advantages. It first provides an easier manufacturing process. In particular the tube can be surrounded by liquid material during a moulding procedure or by a 3D-printing step and thereby defining the fluid channel by the geometrical extension of the fluid tube itself. Furthermore, the fluid tube can be provided with a separate and different material compared to the material of the weight body. In particular a polymer material suitable for use in home appliances, like HDPE, can be used for the fluid tube. Since no own stability for the fluid tube is necessary due to the stability provision of the surrounding weight body, a free and flexible choice of the material is possible for the fluid tube. Last but not least due to the separate material chosen for the fluid tube, a better and improved sealing capability for the connection to the fluid source as well as the fluid drainage is possible. Finally, any undesired interaction between the guided fluid inside of the fluid tube and the material of the weight device and the weight body can be avoided by integrating the inventive fluid tube into the weight body.

It is further an advantage if according to the present invention the weight device is characterised in that the fluid tube comprises at least one positioning rib on the outer surface of the fluid tube engaging with the weight body. A positioning rib is an extension beyond the outer surface of the fluid tube thereby defining a position and ensuring that this position is kept during procedure. In other words, the positioning rib can interact and engage with the surrounding material and therefore ensures that the fluid tube cannot be retracted from its position inside of the weight body. During the moulding procedure for providing and producing the weight device those positioning ribs can help to define the position of the fluid tube during the hardening process of a moulding step generating the weight body.

A further advantage can be achieved if according to the present invention the weight device is characterised in that at least one positioning rib extends transverse to a fluid axis of the fluid tube. Since the fluid is flowing along the fluid axis of the fluid tube this might result in forces along the fluid axis. Providing an extension of the positioning rib transverse, in particular perpendicular to that fluid axis creates an additional weight to secure stability and avoid an undesired retraction of the fluid tube out of the weight body. In particular so those positioning ribs are surrounding, in particular completely surrounding the fluid tube thereby providing a surrounding engagement with the weight body. If more than one positioning rib is provided in particular all positioning ribs are provided with the same or at least the same geometric extension.

A further advantage can be achieved if according to the present invention the weight device is characterised in that the channel inlet and/or the channel outlet extend be on the weight body, in particular providing an inlet connection and/or an outlet connection. Such inlet connection and/or outlet connection can be provided partly by separate parts, can be provided by parts of the weight body or, as discussed later, can be provided by parts of the fluid tube. The extension be on the weight body allows an easier manufacturing process since it is easy and accessible to provide and seal the fluid communication of the inlet connection and/or the outlet connection to the fluid source and/or the fluid drainage. The extension in particular is straight along the fluid axis which has been described further above.

It is further of advantage if according to the present invention the weight device is characterised in that the inlet connection and/or the outlet connection are formed by a fluid tube, in particular by the same fluid tube providing the fluid channel. The fluid tube thereby has a greater geometrical extension than the surrounding weight body. In other words, after the end of the manufacturing process the weight body has extensions of the fluid tube extending beyond the surfaces of the weight body. Beside the easy manufacturing of connecting to the fluid source and the fluid drainage also the positioning during the manufacturing of the weight bodies is optimized. The fluid tube can be hold by the inlet and/or the outlet connection in position and thereby a predefined position is provided. In this predefined position of the manufacturing of the surrounding weight body can be conducted. This can be done by a moulding process as well as by a 3D printing process while during that process the inlet connection and the outlet connection provides secure positioning of the fluid tube in the desired position. If the weight device is configured to be a counter weight, in particular it is casted in a mould.

It is further of advantage if the according to the present invention the weight device is characterised in that the inlet connection and/or the outlet connection comprises sealing means for a fluid-sealed connection to the fluid source and/or the fluid drainage. Those sealing means can be separate sealing means or sealing means that are integrated into the fluid tube. Those separate means can for example be sealing members or sealing rings. They can also be integrated in the outer wall or the end of the fluid tube. In particular it is desired to provide an overlap sealing connection, meaning that a fluid connection coming from the fluid source or leading to the fluid drainage has an overlap surface to provide the sealing functionality against the sealing means of the inlet connection and/or the outlet connection.

Further advantages can be achieved if according to the present invention the weight device is characterised in that the weight body comprises sealing surfaces surrounding the channel inlet and/or the channel outlet. Most sealing surfaces can be provided with integrated or separate sealing means as discussed above. They are able to seal against the weight body and/or against connection tubes extending to either the fluid drainage and/or the fluid source. They can be flat or can be provided with a prepared and/or elevated surface to ensure the provision of the sealing functionality in a secure manner.

It is further of advantage if according to the present invention the weight device is characterised in that the channel inlet and/or the channel outlet is connected to a flexible connecting tube. That means that the connection provides a separate embodiment of the channel inlet and/or the channel outlet. The flexible connecting tube therefore allows a flexible and for example curved or bent extension to provide the secure and sealed fluid communication to the fluid source and/or the fluid drainage. The flexible connecting tube can be made out of a polymer material, in particular an identical material as the fluid tube. A flexible connecting tube can be an extended part of the identical fluid tube or can be a separate component being separate from the fluid tube.

It is further of advantage if according to the present invention the weight device is characterised in that the channel inlet is located on a different level compared with the channel outlet in the mounting position. In particular if the channel outlet is located lower than the channel inlet with relation to the gravity direction the gravity force helps to transport the fluid from the channel inlet to the channel outlet. Of course, also a pump can be used to force any fluid through the fluid channel inside of the weight device.

It is a further object of the present invention to provide a production method for producing an inventive weight device. Such a production method is characterised by the following step:
- Creating the weight device with an internal free space forming the at least one fluid channel.

That internal free space can be formed by external means during the production method, for example being part of a moulding form or being part of a cavity of a moulding cask. Alternatively, this can also be used by providing the fluid tube as discussed further above as thereby the fluid tube ensures the free space for the fluids channel. An inventive production method comes along with the same advantages as discussed in detail with respect to the inventive weight device.

It is further of advantage if according to the present invention the production method is characterised in that the weight body is formed by at least one of the following creating methods:
- 3D Printing,
- casting process.

Aforesaid list is unlimited. Of course, different creating methods can also be combined with each other. Depending on the use of a fluid tube or the creation of a tubeless free space different methods can be of advantage.

It is further an advantage if according to the present invention the production method is characterised in that the weight body is created around the fluid tube providing the fluid channel. This is a very easy and cost-efficient way of the production method. In this case either a 3D printing around the fluid tube or a moulding procedure can take place. For example, the fluid tube can be positioned in the desired position and inside of a mould. The liquid body material is filled into the mould is arranging itself surrounding the fluid tube. After a hardening step the fluid tube is kept in place by the hardened material of the weight body surrounding the fluid tube.

It is further an advantage if according to the present invention the production method is characterised in that the fluid tube is temporary filled with an incompressible medium. Depending on the pressure, the size and the type of the material during a moulding procedure it can help for stability reasons to fill the fluid tube with an incompressible medium during the moulding process. This incompressible medium is in particular a liquid medium so that it can be extracted from the fluid tube after the moulding step and/or any hardening step has been finalized.

The present invention is described in further detail with respect to the accompanying drawings. Those shows schematically:
- Figure 1: a mounting situation of an inventive weight device,
- Figure 2: one square section of an inventive weight device,
- Figure 3: a further embodiment of a square section of an inventive weight device,
- Figure 4: a further embodiment of a square section of an embodiment of the inventive weight device,
- Figure 5: a further embodiment of a square section of an embodiment of an inventive weight device,
- Figure 6: a first step of an inventive production method,
- Figure 7: a next stop of an inventive production method,
- Figure 8: an embodiment of an inventive weight device in mounted position,
- Figure 9: the embodiment of figure 8 in a square section,
- Figure 10: one embodiment of a fluid tube,
- Figure 11: a further mounting situation of an inventive weight device,
- Figure 12: a further mounting situation of an inventive weight device.

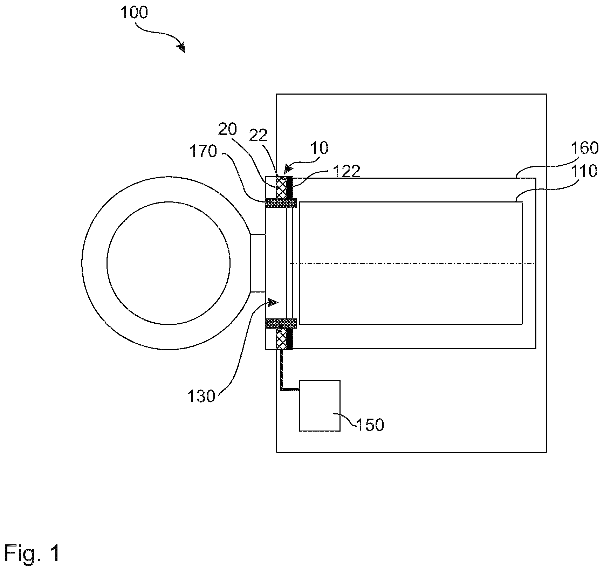

Figure 1 shows a washing machine 100 in a schematic way. It provides a washing drum 110 which can be rotated with high speed the washing drum Is located inside of a washing tub 160. During washing process such high-speed rotation of the washing drum 110 leads to an extraction of water out of the washing drum 110. That extracted water can be taken up by the fluid source 140 (which is not schematically depicted in figure 1). To now guide that water from the fluid source 140 to a fluid drainage 150 it needs to be led through an area which interferes and conflicts with the need to place a weight device 10. The weight device 10 is here surrounding the access opening 130 of the washing machine 100 and is sealed by a seal 170. It is mounted with a mounting interface 22 with its weight body 20 at a counter mounting interface 122 of the washing tub 160. As it can be seen in figure 1 now the fluid coming from the fluid source 140 needs to be guided to the fluid drainage 150 through a position where now the weight body 20 of the weight device 10 is located. While in present commonly known solutions now the weight body 20 has been separated at that position to provide room for extending a fluid tube the inventive weight body 20 can now extend throughout that space.

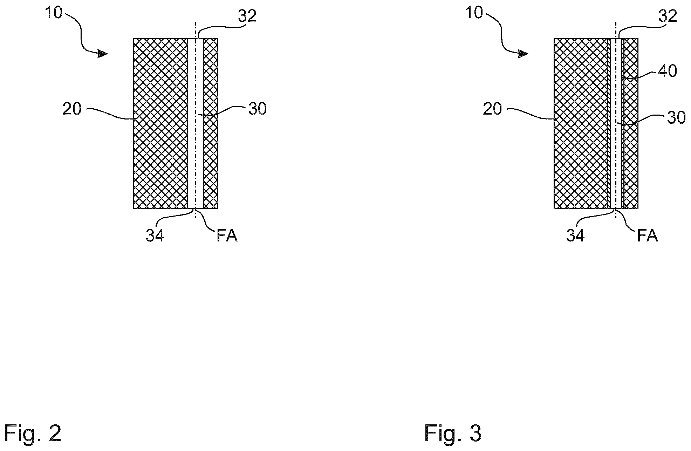

Figure 2 shows the part that is in conflict with the need to provide a fluid communication of figure 1. The weight body 20 of the weight device 10 is for example made out of concrete material. Inside of the weight body 20 a fluid channel 30 is provided having a channel inlet 32 and a fluid outlet 34. In this specific embodiment the whole fluid channel 30 extends along a fluid axis FA.

Figure 3 is a further embodiment of the weight device 10. It is now comprising a fluid tube 40 forming the fluid channel 30. In both embodiments of figure 2 and 3 now a fluid communication is provided through the weight body 20 of the weight device 10. Thereby, the fluid communication is enabled in a position where a weight device 10 as well as fluid communication is necessary. A separation of the weight body 20 can be avoided by providing and integrating the fluid communication functionality into the weight device 10 and the weight body 20.

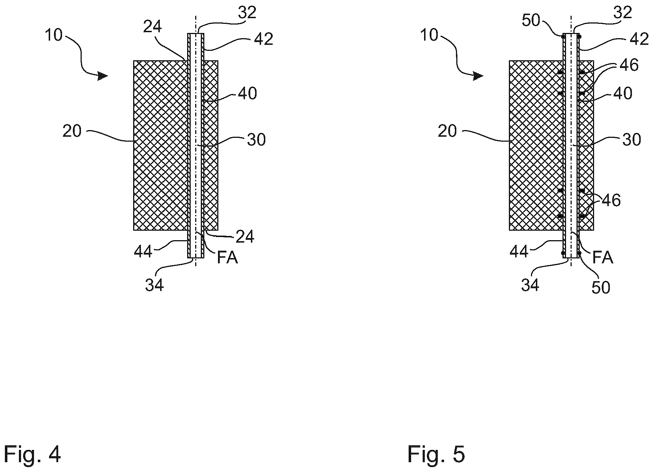

Figure 4 is an embodiment of an inventive weight device 10 based on figure 3. Here the fluid tube 40 extends beyond the surfaces of the weight body 20 along the fluid axis FA. At that extension an inlet connection 42 as well as outlet connection 44 is provided. For provision of a connection to the fluid communication to a fluid source 140 as well as a fluid drainage 150 here the weight body 20 provides sealing surfaces 24 surrounding the inlet connection 42 as well as the outlet connection 44.

In figure 5 a separate way of sealing is provided. Here a ring type sealing means 50 is provided and located at the end of the inlet connection 42 and the outlet connection 44. By overlapping at least partly a fluid communication line to this fluid drainage 150 and/or the fluid source 140 a sealing functionality is provided by the integration of the sealing means 50. Furthermore, figure 5 shows the use of positioning ribs 46. They extend transverse through the fluid axis FA and are surrounding the fluid tube 40 at least once. Figure 5 shows four of those positioning ribs 46. If any forces created along the fluid axis FA those positioning ribs 46 now ensure a safe position and avoid any undesired retraction of the fluid tube 30 out of the weight body 20. Those positioning rips can also be called anti-retraction ribs.

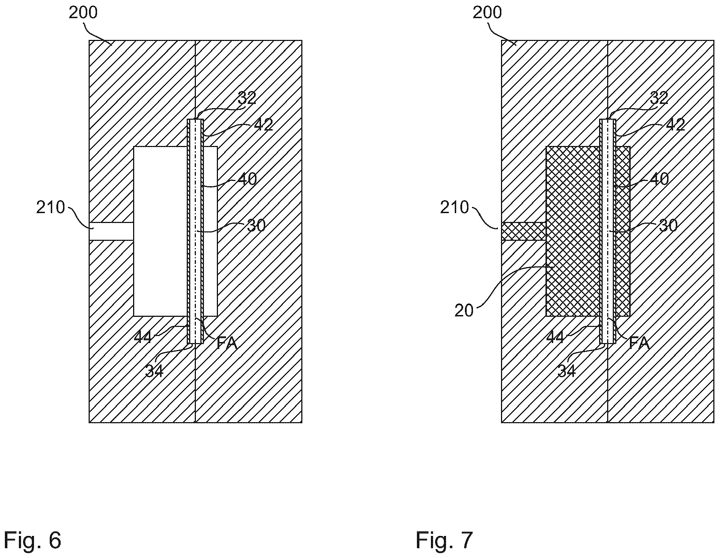

Figures 6 and 7 show a potential production method for producing an inventive weight device 10. In a mould 200 the tube 40 is located. It is positioned in the desired position inside of a cavity of the mould 200. It is hold by the interaction of the inlet connection 42 and the outlet connection 44 with the mould 200. Now the material of the weight body 20 is forced through the mould inlet 210 into the cavity of the mould 200. As soon as the hardening procedure, for example a concrete curing, has been finalized the mould 200 can be opened along the separation lines and according to figure 7 a weight device 10 can be extracted out of the mould being similar to the weight devices depicted in figure 4.

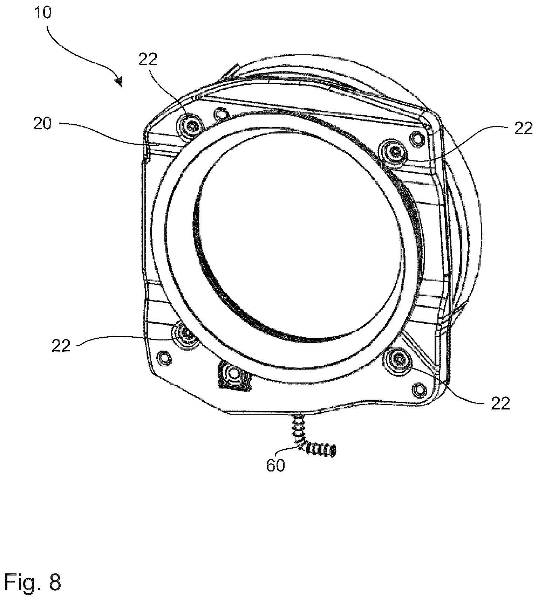

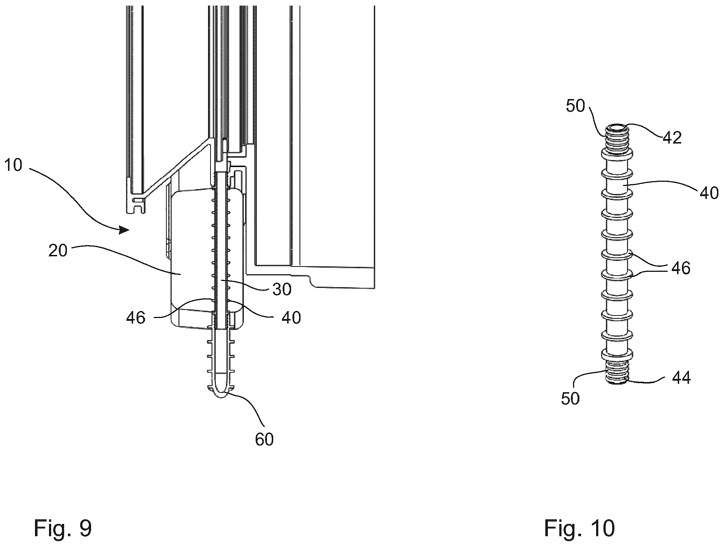

Figures 8 and 9 show a further embodiment of an inventive weight device 10. This one is already mounted at a part of the washing machine 100 (not depicted). Here the mounting interface 22 provides four positions and four bolts to be mounted at the washing tub 160 (not shown in figure 8). It is further depicted in figure 8 that a flexible and separate connecting tube 60 provides a liquid connection around a 90-degree bend In particular the tube 60 is fully flexible and can be bend in any desired orientation. Figure 9 shows that the fluid tube 40 is completely integrated into the weight body 20 of the weight device 10. It is sealingly connected to the separate flexible connecting tube 60.

In figure 10 the fluid tube 40 of figures 8 and 9 is separately depicted. It is provided with sealing means 50 which are integrated part of the body of the fluid tube 40 thereby forming the outer surface of the inlet connection 42 and the outlet connection 44.

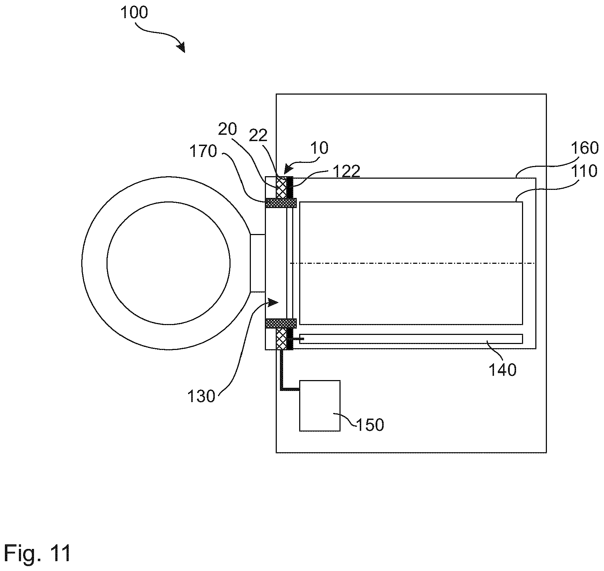

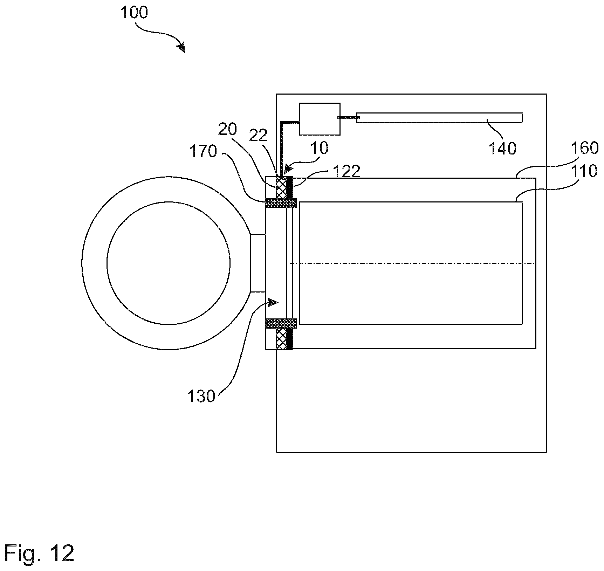

Figure 11 shows a solution similar to Figure 1. However, is this embodiment, the fluid source is depicted below the washing drum 110 inside of the washing tub 160. Figure 12 shows a solution with different fluid flow direction. In this embodiment, the fluid is for example a cleaning water from a fluid source 140 providing the cleaning water and feeding the water with added detergents, cleaning agents or softeners, into the washing tub 160. In such an embodiment, the fluid source 140 is outside of the washing drum 110 and/or the washing tub 160 and the fluid drainage 150 is receiving the fluid inside of the washing tub 160 and/or the washing drum 110.

It is to be understood that the aforesaid description of embodiments describes the present invention only by the way of examples and is not limiting the scope of the present invention.

### Reference signs

- 10: weight device
- 20: weight body
- 22: mounting interface
- 24: sealing surface
- 30: fluid channel
- 32: channel inlet
- 34: channel outlet
- 40: fluid tube
- 42: inlet connection
- 44: outlet connection
- 46: positioning rib
- 50: sealing means
- 60: connecting tube

- 100: washing machine
- 110: washing drum
- 122: counter-mounting-interface
- 130: access opening
- 140: fluid source
- 150: fluid drainage
- 160: washing tub
- 170: seal

- 200: mould
- 210: mould inlet

- FA: fluid axis

## Claims

1. Weight device (10) for increasing stability of a washing drum (110) of a washing machine (100), comprising a weight body (20) with a mounting interface (22) to be mounted at a counter-mounting-interface (122) of the washing machine (100), in particular a washing tub (160) of the washing machine (100), in a position at least partly surrounding an access opening (130) of the washing machine (100) providing access to the washing drum (110), **characterised in that** at least one fluid channel (30) is formed inside of the weight body (20) having a channel inlet (32) for fluid communication with a fluid source (140) of the washing machine (100) and a channel outlet (34) for fluid communication with a fluid drainage (150) of the washing machine (100).

2. Weight device (10) according to claim 1, **characterised in that** the fluid channel (30) is at least partly formed by a fluid tube (40).

3. Weight device (10) according to claim 2, **characterised in that** the fluid tube (40) comprises at least one positioning rib (46) on the outer surface of the fluid tube (40) engaging with the weight body (20).

4. Weight device (10) according to claim 3, **characterised in that** at least one positioning rib (46) extends transverse to a fluid axis (FA) of the fluid tube (40).

5. Weight device (10) according to any of the proceedings claims, **characterised in that** the channel inlet (32) and/or the channel outlet (34) extend beyond the weight body (20), in particular providing an inlet connection (42) and/or an outlet connection (44).

6. Weight device (10) according to claim 5, **characterised in that** the inlet connection (42) and/or the outlet connection (44) are formed by a fluid tube (40), in particular by the same fluid tube (40) providing the fluid channel (30).

7. Weight device (10) according to any of claims 5 or 6, **characterised in that** the inlet connection (42) and/or the outlet connection (44) comprise sealing means (50) for a fluid sealed connection to the fluid source (140) and/or the fluid drainage (150).

8. Weight device (10) according to any of the proceedings claims, **characterised in that** the weight body (20) comprises sealing surfaces (24) surrounding the channel inlet (32) and/or the channel outlet (34).

9. Weight device (10) according to any of the proceedings claims, **characterised in that** the channel inlet (32) and/or the channel outlet (34) is connected to a flexible connecting tube (60).

10. Weight device (10) according to any of the proceedings claims, **characterised in that** the channel inlet (32) is located on a different level compared with the channel outlet (34) in mounting position.

11. Production method for produce a weight device (10) with the features according to any of claims 1 to 10, **characterised by** the following step:
- Creating the weight body (20) with an internal free space forming the at least one fluid channel (30).

12. Production method according to claim 11, **characterised in that** the weight body is formed by at least one of the following creating methods:
- 3D printing
- Casting process

13. Production method according to claims 11 or 12, **characterised in that** the weight body (20) is created around a fluid tube (40) providing the fluid channel (30).

14. Production method according to claim 13, **characterised in that** the fluid tube (40) is temporally filled with an incompressible medium.

## Amended claims

### Amended claims in accordance with Rule 137(2) EPC.

1. Weight device (10) for increasing stability of a washing drum (110) of a washing machine (100), comprising one weight body (20) with a mounting interface (22) to be mounted at a counter-mounting-interface (122) of the washing machine (100), in particular a washing tub (160) of the washing machine (100), in a position at least partly surrounding an access opening (130) of the washing machine (100) providing access to the washing drum (110), and wherein at least one fluid channel (30) is formed inside of the one weight body (20) having a channel inlet (32) for fluid communication with a fluid source (140) of the washing machine (100) and a channel outlet (34) for fluid communication with a fluid drainage (150) of the washing machine (100) **characterised in that** the fluid channel (30) is at least partly formed by a fluid tube (40) and that the one weight body (20) is created around a fluid tube (40) providing the fluid channel (30).

2. Weight device (10) according to claim 1, **characterised in that** the fluid tube (40) comprises at least one positioning rib (46) on the outer surface of the fluid tube (40) engaging with the one weight body (20).

3. Weight device (10) according to claim 2, **characterised in that** at least one positioning rib (46) extends transverse to a fluid axis (FA) of the fluid tube (40).

4. Weight device (10) according to any of the proceedings claims, **characterised in that** the channel inlet (32) and/or the channel outlet (34) extend beyond the one weight body (20), in particular providing an inlet connection (42) and/or an outlet connection (44).

5. Weight device (10) according to claim 4, **characterised in that** the inlet connection (42) and/or the outlet connection (44) are formed by a fluid tube (40), in particular by the same fluid tube (40) providing the fluid channel (30).

6. Weight device (10) according to any of claims 4 or 5, **characterised in that** the inlet connection (42) and/or the outlet connection (44) comprise sealing means (50) for a fluid sealed connection to the fluid source (140) and/or the fluid drainage (150).

7. Weight device (10) according to any of the proceedings claims, **characterised in that** the one weight body (20) comprises sealing surfaces (24) surrounding the channel inlet (32) and/or the channel outlet (34).

8. Weight device (10) according to any of the proceedings claims, **characterised in that** the channel inlet (32) and/or the channel outlet (34) is connected to a flexible connecting tube (60).

9. Weight device (10) according to any of the proceedings claims, **characterised in that** the channel inlet (32) is located on a different level compared with the channel outlet (34) in mounting position.

10. Production method for produce a weight device (10) with the features according to any of claims 1 to 9, **characterised by** the following step:
- Creating the one weight body (20) with an internal free space forming the at least one fluid channel (30).

11. Production method according to claim 10, **characterised in that** the one weight body (20) is formed by at least one of the following creating methods:
- 3D printing
- Casting process

12. Production method according to claim 11, **characterised in that** the fluid tube (40) is temporally filled with an incompressible medium.
